# EUROPEAN PATENT APPLICATION

(11) **EP 4 636 234 A1**
(43) Date of publication of application: **22.10.2025**
(21) Application number: 25171423.4
(22) Date of filing: 17.04.2025
(51) Int. Cl.: F02C 3/22, F02C 7/22, F02C 7/224, F02C 9/40

(54) **MONITORING FUEL PHASE IN AIRCRAFT POWERPLANT FUEL SYSTEM**

(30) Priority: 19.04.2024 US 202418640938
(71) Applicant: RTX Corporation, Farmington, CT 06032 (US)
(72) Inventor: SNYDER, Timothy S., Farmington, 06032 (US); KRAMER, Stephen K., Farmington, 06032 (US); TERWILLIGER, Neil J., Farmington, 06032 (US)
(74) Representative: Dehns

(57) **Abstract**

An operating method is provided for an aircraft powerplant (20). During this method, fuel is directed in a first fuel circuit (102) from a fuel source (92) towards a fuel injector (76) in a combustion section (32) of the aircraft powerplant (20). A fuel system (90) for the aircraft powerplant (20) includes the fuel source (92), the first fuel circuit (102) and the fuel injector (76). The fuel system (90) is configured to fluidly couple the fuel source (92) to the fuel injector (76) through the first fuel circuit (102). A phase parameter of the fuel within the first fuel circuit (102) is monitored at a monitoring location (136) between the fuel source (92) and the fuel injector (76). The fuel system (90) is operated based on the phase parameter. The phase parameter may be indicative of the fuel at the monitoring location (136) being in a gaseous phase. The phase parameter may be indicative of the fuel at the monitoring location (136) being in a liquid phase or a mixed phase.

## Description

### BACKGROUND OF THE DISCLOSURE

### 1. Technical Field

This disclosure relates generally to a powerplant such as a turbine engine and, more particularly, to a fuel system for the powerplant.

### 2. Background Information

As government emissions standards tighten, interest in alternative fuels for gas turbine engines continues to grow. There is interest, for example, in fueling a powerplant such as a gas turbine engine with hydrogen (H₂) fuel rather than a traditional hydrocarbon fuel such as kerosine to reduce greenhouse emissions. Various systems and methods are known in the art for utilizing hydrogen fuel. While these known systems and methods have various advantages, there is still room in the art for improvement.

### SUMMARY OF THE DISCLOSURE

According to an aspect of the present disclosure, an operating method is provided for an aircraft powerplant. During this method, fuel is directed in a first fuel circuit from a fuel source towards a fuel injector in a combustion section of the aircraft powerplant. A fuel system for the aircraft powerplant includes the fuel source, the first fuel circuit and the fuel injector. The fuel system is configured to fluidly couple the fuel source to the fuel injector through the first fuel circuit. A phase parameter of the fuel within the first fuel circuit is monitored at a monitoring location between the fuel source and the fuel injector. The fuel system is operated based on the phase parameter. The fuel system is operated in a first mode where the phase parameter is indicative of the fuel at the monitoring location being in a gaseous phase. The fuel system is operated in a second mode where the phase parameter is indicative of the fuel at the monitoring location being in a liquid phase or a mixed phase, where the mixed phase includes a first portion of the fuel at the monitoring location in the liquid phase and a second portion of the fuel at the monitoring location in the gaseous phase.

According to another aspect of the present disclosure, another operating method is provided for an aircraft powerplant. During this method, fuel is directed in a liquid phase from a fuel source into a fuel delivery circuit. A fuel system for the aircraft powerplant includes the fuel source, the fuel delivery circuit, a primary fuel heater, a secondary fuel heater and a fuel injector. The fuel injector is disposed in a combustion section of the aircraft powerplant. The fuel is heated in the fuel delivery circuit using the primary fuel heater to change the fuel into a gaseous phase or into a mixed phase, where the mixed phase includes a first portion of the fuel in the liquid phase and a second portion of the fuel in the gaseous phase. A phase parameter of the fuel within the fuel delivery circuit is determined at a monitoring location downstream of the primary fuel heater. The fuel system is operated based on the phase parameter. The fuel system delivers the fuel to the fuel injector when the phase parameter is indicative that the fuel at the monitoring location is in the gaseous phase. The fuel system heats the fuel with the secondary fuel heater when the phase parameter is indicative that the fuel at the monitoring location is in the mixed phase such that the fuel in the mixed phase changes into the gaseous phase for subsequent delivery to the fuel injector.

According to still another aspect of the present disclosure, an aircraft powerplant is provided that includes a turbine engine assembly, a fuel system and a sensor system. The turbine engine assembly includes a flowpath, a compressor section, a combustion section and a turbine section. The flowpath extends through the compressor section, the combustion section and the turbine section from an inlet into the flowpath to an exhaust from the flowpath. The fuel system includes a fuel injector, a fuel reservoir, a fuel delivery circuit and a primary fuel heater. The fuel injector is arranged in the combustion section. The fuel reservoir is configured to contain fuel in a liquid phase. The fuel delivery circuit is configured to deliver the fuel from the fuel reservoir to the fuel injector. The primary fuel heater is configured to heat the fuel which is directed in the fuel delivery circuit to a monitoring location between the fuel reservoir and the fuel injector. The sensor system is configured to monitor a phase parameter of the fuel within the fuel delivery circuit at the monitoring location. The fuel system is configured to operate in a first mode where the phase parameter indicates the fuel at the monitoring location is in a gaseous phase. The fuel system is configured to operate in a second mode where the phase parameter indicates the fuel at the monitoring location is in the liquid phase or a mixed phase, where the mixed phase includes a first portion of the fuel at the monitoring location in the liquid phase and a second portion of the fuel at the monitoring location in the gaseous phase.

The fuel system may be configured to direct the fuel through the fuel delivery circuit from the fuel reservoir to the fuel injector during the first mode. The fuel system may also include a secondary fuel heater downstream of the monitoring location. The fuel system may be configured to further heat the fuel using the secondary fuel heater prior to delivering the fuel to the fuel injector.

The operating method may also include delivering gaseous fuel to the fuel injector from a gaseous fuel source at least while the secondary fuel heater is heating the fuel to change from the mixed phase to the gaseous phase.

The fuel may be or otherwise include hydrogen fuel.

The fuel system may also include a first fuel heater. During the first mode, the fuel system may direct the fuel from the first fuel circuit to the fuel injector. During the second mode, the fuel system may heat the fuel using the first fuel heater prior to directing the fuel from the first fuel circuit to the fuel injector.

The first fuel heater may be non-operational during the first mode.

The fuel may bypass the first fuel heater as the fuel system directs the fuel through the first fuel circuit from the fuel source to the fuel injector during the first mode.

The first fuel heater may not heat the fuel directed from the fuel source to the fuel injector during the first mode.

The operating method may also include heating the fuel with a second fuel heater during the first mode and the second mode. The second fuel heater may be disposed between the monitoring location and the fuel source along the first fuel circuit.

The second fuel heater may be configured as or otherwise include a heat exchanger which transfers heat energy from combustion products to be exhausted from the aircraft powerplant into the fuel.

The first fuel heater may be arranged between the monitoring location and the second fuel heater along the first fuel circuit.

The fuel system may also include a second fuel circuit. The first fuel heater may be arranged along the second fuel circuit. During the second mode, the second fuel circuit may receive the fuel from the first fuel circuit at a first location downstream of the monitoring location and may then direct the fuel back into the first fuel circuit at a second location upstream of the monitoring location and downstream of the second fuel heater.

The fuel system may also include a second fuel circuit. The first fuel heater may be arranged along the second fuel circuit. During the second mode, the second fuel circuit may receive the fuel from the first fuel circuit at a first location downstream of the monitoring location and may then direct the fuel back into the first fuel circuit at a second location upstream of the second fuel heater.

The fuel system may also include a second fuel circuit. The first fuel heater may be arranged along the second fuel circuit. During the second mode, the second fuel circuit may receive the fuel from the first fuel circuit at a first location downstream of the monitoring location and may then direct the fuel back into the first fuel circuit at a second location upstream of the monitoring location.

The first fuel heater may be configured as or otherwise include an electric heater.

The first fuel heater may be configured as or otherwise include a heat engine.

The heat engine may be configured as or otherwise include a combustion engine.

The heat engine may be configured as or otherwise include a fuel cell.

The first fuel heater may be configured as or otherwise include a heat exchanger which transfers heat energy from a working fluid into the fuel.

The operating method may also include: continued monitoring of the phase parameter during the operating of the fuel system in the second mode; and switching from the second mode to the first mode once the phase parameter is indicative of the fuel at the monitoring location being in the gaseous phase.

The fuel system may also include a gaseous fuel source. The fuel system may fluidly decouple the gaseous fuel source from the fuel injector during the first mode. The fuel system may fluidly couple the gaseous fuel source to the fuel injector during the first mode.

The operating method may also include directing a portion of the fuel in the gaseous phase from the first fuel circuit into the gaseous fuel source.

The aircraft powerplant may be configured as or otherwise include a turbine engine.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of a powerplant for an aircraft.
FIG. 2 is a partial schematic illustration of a combustion section between a compressor section and a turbine section.
FIG. 3 is a schematic illustration of a fuel system and a control system arranged with the combustion section.
FIG. 4 is a flow diagram of a method for operating an aircraft powerplant.
FIG. 5 is a schematic illustration of another fuel system with the control system and the combustion section.
FIG. 6 is a schematic illustration of still another fuel system with the control system and the combustion section.
FIG. 7 is a schematic illustration of the fuel system with the combustion section, where a gaseous fuel source is rechargeable by a fuel delivery circuit of the fuel system.
FIG. 8 is a schematic illustration of the fuel system with the combustion section, where the gaseous fuel source and the fuel delivery circuit are independently fluidly coupled to a plurality of fuel injectors.

### DETAILED DESCRIPTION

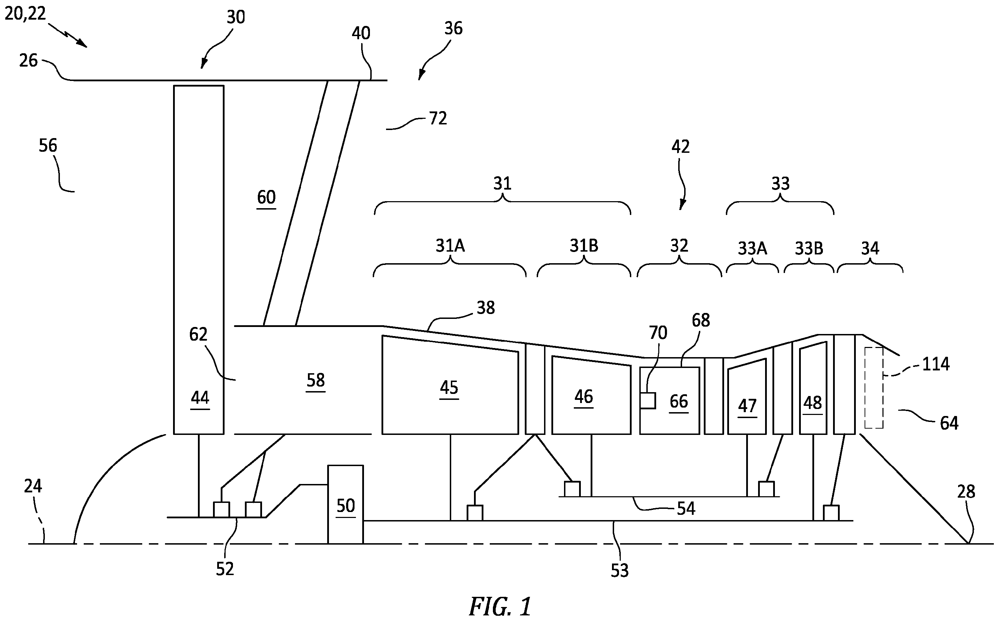

FIG. 1 illustrates a powerplant 20 for an aircraft. The aircraft may be an airplane, a drone (e.g., an unmanned aerial vehicle (UAV)) or any other manned or unmanned aerial vehicle or system. The aircraft powerplant 20 may be configured as, or otherwise included as part of, a propulsion system for the aircraft. The aircraft powerplant 20 of FIG. 1, for example, is configured as a turbofan turbine engine 22. The aircraft powerplant 20 of the present disclosure, however, is not limited to turbofan turbine engines nor to propulsion system applications. The aircraft powerplant 20, for example, may alternatively be configured as a turbojet turbine engine, a turboshaft turbine engine, a turboprop turbine engine, or any other combustion engine operable to drive rotation of a ducted or open propulsor rotor. In another example, the aircraft powerplant 20 may be configured as, or otherwise included as part of, a power generation system for the aircraft such as an auxiliary power unit (APU).

The turbine engine 22 of FIG. 1 extends axially along an axial centerline 24 between a forward, upstream end 26 and an aft, downstream end 28. The turbine engine 22 includes a fan section 30, a compressor section 31, a combustion section 32, a turbine section 33 and an exhaust section 34. The compressor section 31 of FIG. 1 includes a low pressure compressor (LPC) section 31A and a high pressure compressor (HPC) section 31B. The turbine section 33 of FIG. 1 includes a high pressure turbine (HPT) section 33A and a low pressure turbine (LPT) section 33B.

The engine sections 30-34 of FIG. 1 are arranged within and/or are formed by a stationary engine structure 36; e.g., an engine housing. This engine structure 36 includes an inner engine structure 38 (e.g., a core casing structure) and an outer engine structure 40 (e.g., a fan casing structure). The inner engine structure 38 may house one or more of the engine sections 31A-33B; e.g., a core 42 of the turbine engine 22. The inner engine structure 38 may also form the exhaust section 34. The outer engine structure 40 may house at least the fan section 30.

Each of the engine sections 30, 31A, 31B, 33A and 33B includes a respective bladed rotor 44-48. Each of these bladed rotors 44-48 includes a plurality of rotor blades arranged circumferentially around and connected to one or more respective rotor disks and/or hubs. The rotor blades, for example, may be formed integral with or mechanically fastened, welded, brazed and/or otherwise attached to the respective rotor disk(s) and/or the respective hub(s).

The fan rotor 44 is connected to a geartrain 50, for example, through a fan shaft 52. The geartrain 50 and the LPC rotor 45 are connected to and driven by the LPT rotor 48 through a low speed shaft 53. The HPC rotor 46 is connected to and driven by the HPT rotor 47 through a high speed shaft 54. The engine shafts 52-54 are rotatably supported by a plurality of bearings which mount the engine shafts 52-54 to the inner engine structure 38. The rotatable members 44-48 and 52-54 of the turbine engine 22 may thereby rotate about the centerline 24.

During turbine engine operation, air enters the turbine engine 22 through an airflow inlet 56 into the turbine engine 22. This air is directed through the fan section 30 and into a core flowpath 58 and a bypass flowpath 60. The core flowpath 58 extends sequentially through the engine sections 31A-34 from an inlet 62 into the core flowpath 58 to an exhaust 64 from the core flowpath 58. The air within the core flowpath 58 may be referred to as "core air". The bypass flowpath 60 extends through a bypass duct and bypasses the engine core 42. The air within the bypass flowpath 60 may be referred to as "bypass air".

The core air is compressed by the LPC rotor 45 and the HPC rotor 46 and directed into a combustion chamber 66 of a combustor 68 in the combustion section 32. Fuel (e.g., H₂ gas) is injected or otherwise delivered by one or more fuel injector assemblies 70 (one visible in FIG. 1) into the combustion chamber 66 and mixed with the compressed core air to provide a fuel-air mixture. This fuel-air mixture is ignited and combustion products thereof flow through and sequentially drive rotation of the HPT rotor 47 and the LPT rotor 48 before being directed out of the turbine engine 22 through the exhaust section 34 and the core exhaust 64. The rotation of the HPT rotor 47 and the LPT rotor 48 respectively drive rotation of the HPC rotor 46 and the LPC rotor 45 and, thus, compression of the air received from the core inlet 62. The rotation of the LPT rotor 48 also drives rotation of the fan rotor 44, which propels the bypass air through the bypass flowpath 60 and out of the turbine engine 22 through an exhaust 72 from the bypass flowpath 60. The propulsion of the bypass air may account for a majority of thrust generated by the aircraft propulsion system and its turbine engine 22.

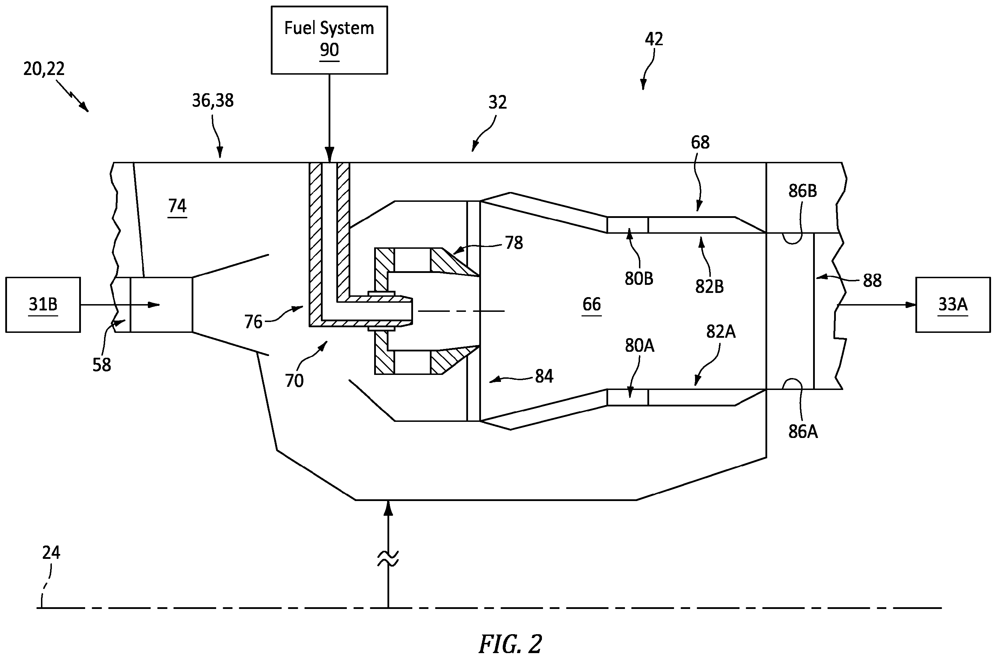

FIG. 2 illustrates a portion of the combustion section 32 along the core flowpath 58 between the HPC section 31B and the HPT section 33B. This combustion section 32 includes the combustor 68, a diffuser plenum 74 and the one or more injector assemblies 70 (one visible in FIG. 2). Briefly, the combustor 68 is disposed within (e.g., surrounded by) the diffuser plenum 74. This diffuser plenum 74 receives the compressed core air from the HPC section 31B for subsequent provision into the combustion chamber 66. Each injector assembly 70 of FIG. 2 includes a fuel injector 76 mated with an air swirler structure 78. The fuel injector 76 injects the fuel into the combustion chamber 66. The air swirler structure 78 directs some of the core air from the diffuser plenum 74 into the combustion chamber 66 in a manner that facilitates mixing the core air with the injected fuel. One or more igniters (not shown) ignite the fuel-air mixture within the combustion chamber 66. One or more quench apertures 80A, 80B (generally referred to as "80") (e.g., dilution holes) in each wall 82A, 82B (generally referred to as "82") of the combustor 68 direct additional core air from the diffuser plenum 74 into the combustion chamber 66 to quench (e.g., stoichiometrically lean) the combustion products; e.g., the ignited fuel-air mixture. The present disclosure, however, is not limited to such a quenched combustion process.

The combustor 68 may be configured as an annular combustor; e.g., an annular floating wall combustor. The combustor 68 of FIG. 2, for example, includes an annular combustor bulkhead wall 84 ("bulkhead"), the tubular inner combustor wall 82A ("inner wall"), and the tubular outer combustor wall 82B ("outer wall"). The bulkhead 84 of FIG. 2 extends radially between and to the inner wall 82A and the outer wall 82B. The bulkhead 84 may be connected (e.g., mechanically fastened or otherwise attached) to the inner wall 82A and/or the outer wall 82B. Each combustor wall 82 projects axially along the centerline 24 out from the bulkhead 84 towards the HPT section 33B. The inner wall 82A of FIG. 2, for example, projects axially to and may be connected to an inner platform 86A of a downstream stator vane array 88 in the HPT section 33B. The outer wall 82B of FIG. 2 projects axially to and may be connected to an outer platform 86B of the stator vane array 88. With the arrangement of FIG. 2, the combustion chamber 66 is formed by and extends radially within the combustor 68 between and to the inner wall 82A and the outer wall 82B. The combustion chamber 66 is formed by and extends axially (in an upstream direction along the core flowpath 58) into the combustor 68 from the stator vane array 88 to the bulkhead 84. The combustion chamber 66 also extends within the combustor 68 circumferentially about (e.g., completely around) the centerline 24, which may configure the combustion chamber 66 as a full-hoop annulus.

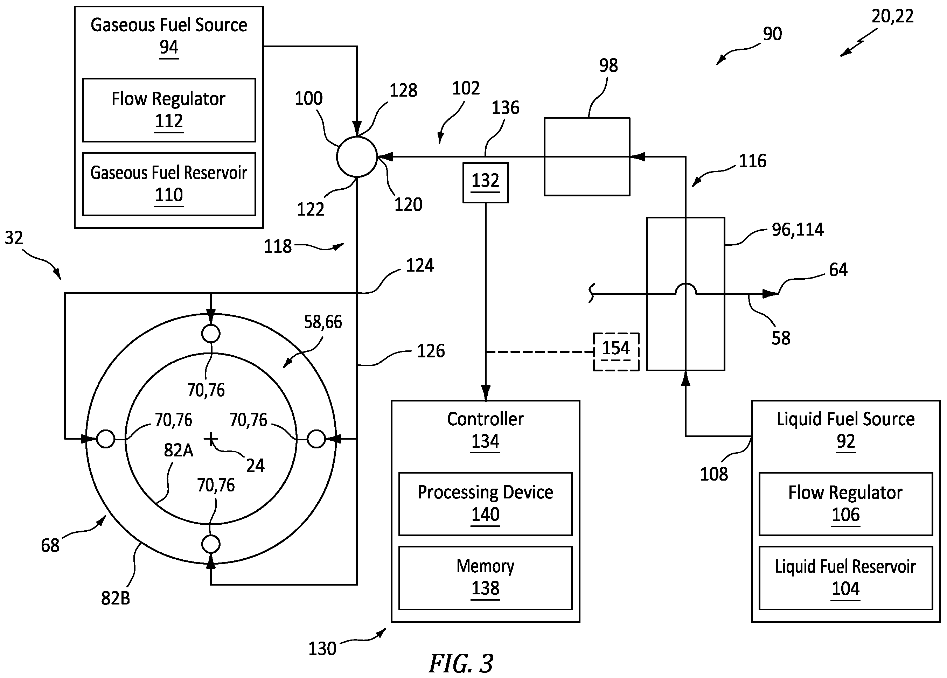

Referring to FIG. 3, the aircraft powerplant 20 includes a fuel system 90 configured to deliver the fuel in a gaseous phase (e.g., gaseous fuel) to the combustion section 32 and its combustor 68. Briefly, the gaseous fuel delivered by the fuel system 90 may be a non-hydrocarbon fuel; e.g., a hydrocarbon free fuel. The gaseous fuel, for example, may be gaseous hydrogen fuel; e.g., hydrogen (H₂) gas. The fuel system 90 of FIG. 3 includes the one or more fuel injectors 76, a liquid fuel source 92 (e.g., a primary fuel source), a gaseous fuel source 94 (e.g., a secondary, startup, auxiliary and/or reserve fuel source), a primary fuel heater 96, a secondary fuel heater 98, a circuit flow regulator 100 and a fuel delivery circuit 102. It is contemplated, however, the fuel system 90 may omit the secondary fuel heater 98 or the gaseous fuel source 94 in other embodiments.

The liquid fuel source 92 of FIG. 3 includes a liquid fuel reservoir 104 and a liquid source flow regulator 106. The liquid fuel reservoir 104 is configured to store the fuel before, during and/or after turbine engine operation. Here, the fuel is stored within the liquid fuel reservoir 104 primarily (e.g., at least eighty or ninety percent) or completely in a liquid phase; e.g., liquid fuel such as liquid hydrogen (H₂). The liquid fuel reservoir 104, for example, may be configured as or otherwise include a tank, a cylinder, a pressure vessel, a bladder or any other type of fuel storage container for liquid fuel. The liquid source flow regulator 106 is configured to direct a flow of the fuel from the liquid fuel reservoir 104 into the fuel delivery circuit 102 at an upstream end 108 of the fuel delivery circuit 102. The liquid source flow regulator 106, for example, may be configured as or otherwise include a pump and/or a valve.

The gaseous fuel source 94 of FIG. 3 includes a gaseous fuel reservoir 110 and a gaseous source flow regulator 112. The gaseous fuel reservoir 110 is configured to store the fuel before, during and/or after turbine engine operation. Here, the fuel is stored within the gaseous fuel reservoir 110 (e.g., completely) in the gaseous phase; e.g., gaseous fuel such as gaseous hydrogen (H₂). The gaseous fuel reservoir 110, for example, may be configured as or otherwise include a tank, a cylinder, a pressure vessel, a bladder or any other type of fuel storage container for gaseous fuel. The gaseous source flow regulator 112 of FIG. 3 is configured to direct a flow of the fuel from the gaseous fuel reservoir 110 into the fuel delivery circuit 102 at (or downstream of) the circuit flow regulator 100. The gaseous source flow regulator 112, for example, may be configured as or otherwise include a compressor and/or a valve.

The primary fuel heater 96 is configured to heat the fuel within the fuel delivery circuit 102, for example, to at least partially or completely facilitate a phase change in the fuel from its liquid phase to its gaseous phase. The primary fuel heater 96 of FIG. 3, for example, is configured as or otherwise includes a primary heat exchanger 114 arranged along (e.g., fluidly coupled inline with, disposed adjacent and in thermal communication with, etc.) the fuel delivery circuit 102 and the core flowpath 58. This primary heat exchanger 114 is arranged along the fuel delivery circuit 102, downstream of the liquid fuel source 92 and upstream of one or more of the fuel system members 98 and/or 100. Referring to FIG. 1, the primary heat exchanger 114 is also arranged along the core flowpath 58, downstream of the combustion section 32. The primary heat exchanger 114 of FIG. 1, for example, is disposed in the exhaust section 34 downstream of the LPT section 33B and upstream of the core exhaust 64.

The primary heat exchanger 114 is schematically shown in FIG. 3 as a cross-flow heat exchanger. It is contemplated, however, the primary heat exchanger 114 may alternatively be configured as parallel flow heat exchanger, a counterflow heat exchanger, or may include different sections with different flow arrangements. The fuel system 90 of the present disclosure therefore is not limited to any particular types or configurations of primary heat exchangers. Moreover, while the primary fuel heater 96 is described as a heat exchanger arranged in the turbine engine 22, it is contemplated the primary fuel heater 96 may alternatively be disposed outside of the turbine engine 22 and/or configured as another type of heater.

The secondary fuel heater 98 of FIG. 3 is also configured to heat the fuel within the fuel delivery circuit 102, for example, to further (e.g., when needed) facilitate the phase change in the fuel from its liquid phase to its gaseous phase. The secondary fuel heater 98 of FIG. 3, for example, is arranged along (e.g., fluidly coupled inline with, disposed adjacent and in thermal communication with, etc.) the fuel delivery circuit 102. The secondary fuel heater 98 may be disposed outside of the engine core 42 (see FIG. 1) and, more generally, outside of the turbine engine 22 (see FIG. 1) depending on how the fuel system 90 is arranged with the aircraft. Examples of the secondary fuel heater 98 include, but are not limited to, an electric heater, another heat engine (e.g., an auxiliary power unit (APU), a fuel cell, a companion propulsion system engine, etc.), a heat exchanger in thermal communication with another heat source (e.g., the other engine, aircraft electronics such as avionics, a cabin air system, etc.), another heat source within the turbine engine 22, or another heat source outside of the turbine engine 22.

The circuit flow regulator 100 of FIG. 3 is configured as a three-way valve. The circuit flow regulator 100, however, may alternatively be configured as or otherwise include an arrangement of (e.g., two-way) valves and/or other flow control devices (e.g., pumps, compressors, etc.) operable to selectively control fuel flow thereacross.

The fuel delivery circuit 102 is configured to fluidly couple the liquid fuel source 92 and the gaseous fuel source 94 to the fuel injectors 76. The fuel delivery circuit 102 of FIG. 3, for example, includes an upstream section 116 and a downstream section 118. The circuit upstream section 116 of FIG. 3 extends from the upstream end 108 of the fuel delivery circuit 102 to a first inlet 120 into the circuit flow regulator 100. Here, the primary fuel heater 96 and the secondary fuel heater 98 are arranged along the circuit upstream section 116. The circuit upstream section 116 of FIG. 3, for example, extends sequentially through the primary fuel heater 96 and the secondary fuel heater 98 from the liquid fuel source 92 to the circuit flow regulator 100. The circuit downstream section 118 of FIG. 3 extends from an outlet 122 from the circuit flow regulator 100 to a downstream end 124 of the fuel delivery circuit 102. At the circuit downstream end 124, the circuit downstream section 118 is fluidly coupled to the fuel injectors 76 in parallel; e.g., through a fuel injector manifold 126. The fuel delivery circuit 102 is also fluidly couplable to the gaseous fuel source 94 through the circuit flow regulator 100. The gaseous fuel source 94 of FIG. 3, for example, is fluidly coupled to a second inlet 128 into the circuit flow regulator 100.

The aircraft powerplant 20 also includes a control system 130 for controlling operation of at least the fuel system 90 during turbine engine operation. The control system 130 of FIG. 3 includes a fuel phase sensor 132 and a controller 134.

The fuel phase sensor 132 is arranged with the fuel delivery circuit 102 and its circuit upstream section 116 at a monitoring location 136. The fuel phase sensor 132 is configured to measure a phase parameter of the fuel within the fuel delivery circuit 102 and its circuit upstream section 116 at the monitoring location 136. This phase parameter is indicative of (e.g., may correlate to, may be processed to determine, etc.) a phase of the fuel within the fuel delivery circuit 102 and its circuit upstream section 116 at the monitoring location 136. The indicated phase may be the gaseous phase where (e.g., all) of the fuel at the monitoring location 136 is the gaseous fuel; e.g., hydrogen (H₂) gas. The indicated phase may be the liquid phase where (e.g., all) of the fuel at the monitoring location 136 is the liquid fuel; e.g., liquid hydrogen (H₂). The indicated phase may alternatively be a mixed phase where (a) a first portion of the fuel at the monitoring location 136 is the gaseous fuel and (b) a second portion of the fuel at the monitoring location 136 is the liquid fuel.

The phase parameter may be any measurable operational parameter of the fuel which may be processed by the controller 134 to determine (or infer) the phase of the fuel at the monitoring location 136. Examples of this phase parameter include, but are not limited to, fuel pressure at the monitoring location 136, fuel temperature at the monitoring location 136 and/or presence of liquid droplets at the monitoring location 136. Examples of the fuel phase sensor 132 include, but are not limited to, a fuel pressure sensor, a fuel temperature sensor, an optical droplet sensor and a heated wire droplet sensor.

The controller 134 is in signal communication (e.g., hardwired and/or wirelessly coupled) with the fuel phase sensor 132 and the circuit flow regulator 100. The controller 134 may also be in signal communication with the liquid source flow regulator 106 and/or the gaseous source flow regulator 112, the primary fuel heater 96 (when actuatable) and/or the secondary fuel heater 98 (when actuatable). The controller 134 may be implemented with a combination of hardware and software. The hardware may include memory 138 and at least one processing device 140, which processing device 140 may include one or more single-core and/or multi-core processors. The hardware may also or alternatively include analog and/or digital circuitry other than that described above.

The memory 138 is configured to store software (e.g., program instructions) for execution by the processing device 140, which software execution may control and/or facilitate performance of one or more operations such as those described below. The memory 138 may be a non-transitory computer readable medium. For example, the memory 138 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

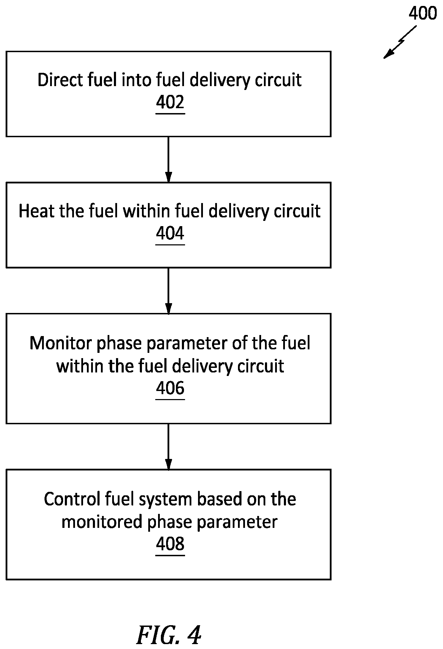

FIG. 4 is a flow diagram of a method 400 for operating an aircraft powerplant. For ease of description, the operating method 400 is described below with reference to the aircraft powerplant 20 of FIGS. 1-3. The operating method 400 is also described below with reference to the fuel as hydrogen fuel. The operating method 400, however, may alternatively be performed for various other aircraft propulsion systems and/or with various other types of fuel which may be stored as a liquid and delivered to fuel injector(s) as a gas.

In step 402, the hydrogen fuel is directed into the fuel delivery circuit 102 from the liquid fuel source 92. Within the liquid fuel source 92, the hydrogen fuel may be stored primarily or completely in its liquid phase; e.g., as liquid hydrogen (H₂). The hydrogen fuel initially directed into the fuel delivery circuit 102 at the circuit upstream end 108 therefore may also be primarily in the liquid phase.

In step 404, the hydrogen fuel is heated using the primary fuel heater 96. During normal turbine engine operation (e.g., during aircraft takeoff, aircraft flight and/or aircraft landing), the primary fuel heater 96 may be operable to facilitate a phase change of all of the hydrogen fuel passing therethrough from the liquid phase to the gaseous phase. Relatively hot combustion products, for example, may flow through the exhaust section 34 and, thus, the primary heat exchanger 114 at a relatively fast flowrate during normal turbine engine operation. The primary heat exchanger 114 may thereby transfer a relatively large quantity of heat energy from the combustion products into the hydrogen fuel and heat the hydrogen fuel to a temperature at or above its boiling point temperature. However, under certain circumstances, the primary fuel heater 96 may be operable to facilitate a phase change of some (but, not all) of the hydrogen fuel passing therethrough from the liquid phase to the gaseous phase. For example, during initial startup of the turbine engine 22, (a) the combustion products flowing through the exhaust section 34 and, thus, the primary heat exchanger 114 may not be heated up to normal operating temperature and/or (b) the flowrate of the combustion products through the exhaust section 34 and, thus, the primary heat exchanger 114 may be relatively slow. The primary heat exchanger 114 may thereby transfer a lower quantity of heat energy from the combustion product into the hydrogen fuel and heat some (but, not all) or none of the hydrogen fuel to a temperature at or above its boiling point temperature. The hydrogen fuel output from the primary fuel heater 96 may thereby have a mixed phase (or even a liquid phase) under such circumstances.

In step 406, the control system 130 monitors the phase parameter of the hydrogen fuel at the monitoring location 136.

In step 408, operation of the fuel system 90 is controlled based on the monitored phase parameter. For example, where the phase parameter indicates the hydrogen fuel flowing within the fuel delivery circuit 102 at the monitoring location 136 is all in the gaseous phase, the fuel system 90 may be operated in a first mode of operation. However, where the phase parameter indicates the hydrogen fuel flowing within the fuel delivery circuit 102 at the monitoring location 136 is in the mixed phase (or even the liquid phase), the fuel system 90 may be operated in a second mode of operation.

During the first mode, the controller 134 may signal the circuit flow regulator 100 to direct the hydrogen gas from the circuit upstream section 116 into the circuit downstream section 118 for delivery to the fuel injectors 76. Here, the circuit flow regulator 100 may fluidly decouple the gaseous fuel source 94 from the fuel delivery circuit 102 and its circuit downstream section 118. The secondary fuel heater 98 may also be non-operational.

During the second mode, the controller 134 may signal the circuit flow regulator 100 to fluidly decouple the circuit downstream section 118 from the circuit upstream section 116. The controller 134 may also signal the secondary fuel heater 98 (or actuator(s) arranged therewith) to facilitate supplemental heating of the hydrogen fuel within the circuit upstream section 116. This supplemental heating of the hydrogen fuel may continue until the monitored phase parameter, still being monitored by the control system 130, indicates all of the hydrogen fuel is in the gaseous phase. The controller 134 may then signal the circuit flow regulator 100 to fluidly couple the circuit upstream section 116 to the circuit downstream section 118; e.g., change from operation in the second mode to operation in the first mode. The hydrogen gas may then flow from the circuit upstream section 116 into the circuit downstream section 118 for delivery to the fuel injectors 76. In this manner, the fuel system 90 may ensure the hydrogen fuel delivered into the combustion chamber 66 by the fuel injectors 76 is (e.g., entirely) in the gaseous phase. By contrast, if some of the hydrogen fuel was delivered into the combustion chamber 66 in the liquid phase, a higher mass of the hydrogen fuel would be delivered than expected which may result in a surging combustion process.

Following the coupling of the circuit sections 116 and 118 together through the circuit flow regulator 100, the secondary fuel heater 98 may continue its supplemental heating of the hydrogen fuel flowing through the circuit upstream section 116 for a period of time. This may ensure the hydrogen fuel delivered to the fuel injectors 76 continues to be delivered in the gaseous phase. Alternatively, the controller 134 may signal the secondary fuel heater 98 (or the actuator(s) arranged therewith) to stop the supplemental heating of the hydrogen fuel. Here, the secondary fuel heater 98 is non-operational.

While the circuit flow regulator 100 fluidly decouples the circuit upstream section 116 from the circuit downstream section 118 for the supplemental heating of the hydrogen fuel, the fuel injectors 76 may be starved of the hydrogen fuel. Therefore, the controller 134 may signal the circuit flow regulator 100 to fluidly couple the gaseous fuel source 94 to the circuit downstream section 118 to maintain (or initially provide) delivery of the hydrogen gas to the fuel injectors 76. Following the coupling of the circuit sections 116 and 118 together through the circuit flow regulator 100, the gaseous fuel source 94 may continue to direct the hydrogen gas into the circuit downstream section 118 for a period of time. This may ensure an adequate supply of the hydrogen gas is delivered to the fuel injectors 76. Alternatively, the controller 134 may signal the circuit flow regulator 100 to fluidly decouple the gaseous fuel source 94 from the fuel delivery circuit 102 and its circuit downstream section 118.

While the provision of the hydrogen gas by the gaseous fuel source 94 is described above as being paired with the supplemental heating of the hydrogen fuel by the secondary fuel heater 98, the present disclosure is not limited thereto. For example, it is contemplated the secondary fuel heater 98 may alternatively remain non-operational (or omitted), and the gaseous fuel source 94 may deliver (e.g., all of) the hydrogen gas to the fuel injectors 76 until the primary fuel heater 96 is operable to output (e.g., only) the hydrogen gas.

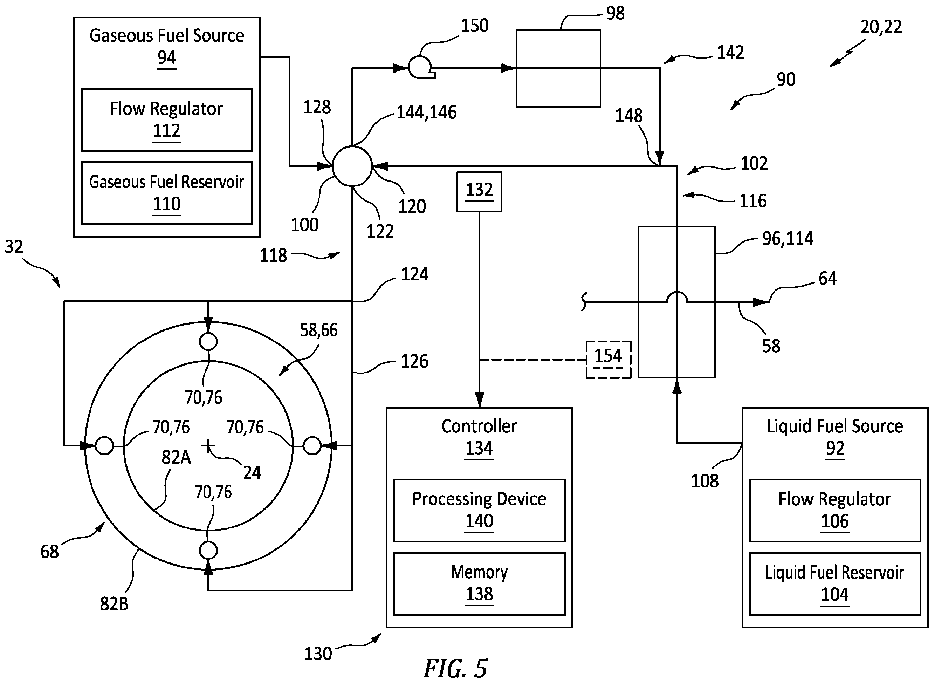

In some embodiments, referring to FIG. 5, the fuel system 90 may include a fuel recirculation circuit 142. An upstream end 144 of this fuel recirculation circuit 142 may be fluidly coupled to a second outlet 146 from the circuit flow regulator 100. A downstream end 148 of the fuel recirculation circuit 142 may be fluidly coupled to the fuel delivery circuit 102 and its circuit upstream section 116 at a location between the primary fuel heater 96 and the monitoring location 136. Here, the secondary fuel heater 98 is arranged along the fuel recirculation circuit 142 with an additional pump 150 to facilitate circulation of the hydrogen fuel between the circuit upstream section 116 and the fuel recirculation circuit 142. With this arrangement, during the first mode, the circuit flow regulator 100 may fluidly decouple the fuel delivery circuit 102 from the fuel recirculation circuit 142 while fluidly coupling the circuit upstream section 116 to the circuit downstream section 118. The hydrogen fuel may thereby flow through the fuel delivery circuit 102 to the fuel injectors 76 while (e.g., completely) bypassing the fuel recirculation circuit 142. However, during the second mode, the circuit flow regulator 100 may fluidly couple the circuit upstream section 116 to the fuel recirculation circuit 142 while fluidly decoupling the circuit upstream section 116 from the circuit downstream section 118. The hydrogen fuel may thereby recirculate between the circuit upstream section 116 and the fuel recirculation circuit 142 for the supplemental heating of the hydrogen fuel with the secondary fuel heater 98.

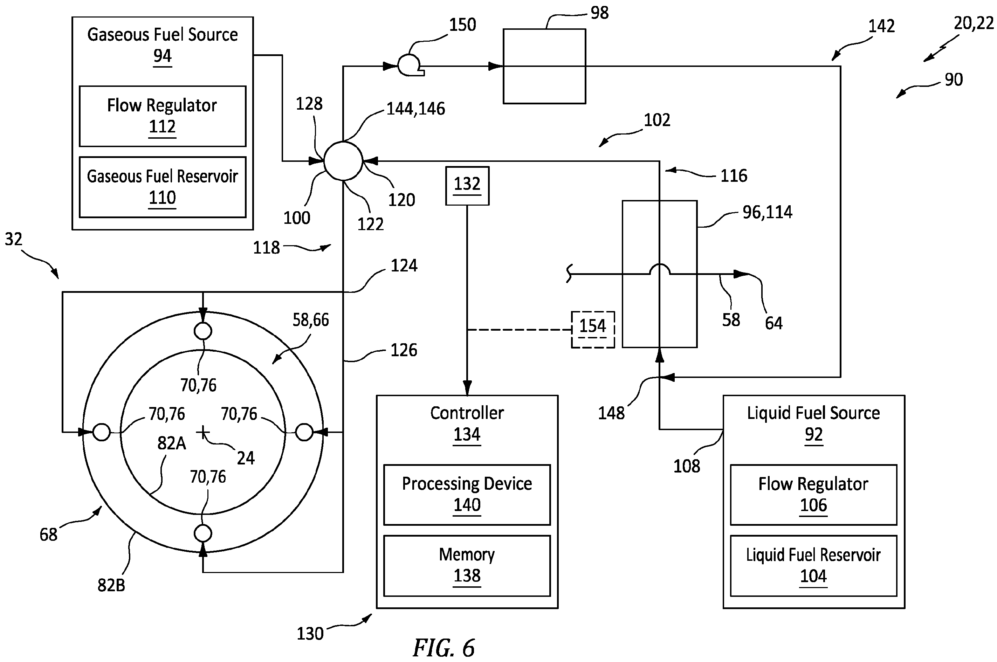

In some embodiments, referring to FIG. 5, the connection location between the downstream end 148 of the fuel recirculation circuit 142 and the circuit upstream section 116 may be downstream of the primary fuel heater 96. In other embodiments, referring to FIG. 6, the connection location between the downstream end 148 of the fuel recirculation circuit 142 and the circuit upstream section 116 may be upstream of the primary fuel heater 96. With such an arrangement, the primary fuel heater 96 may also (or alternatively) be used for the supplemental heating of the hydrogen fuel.

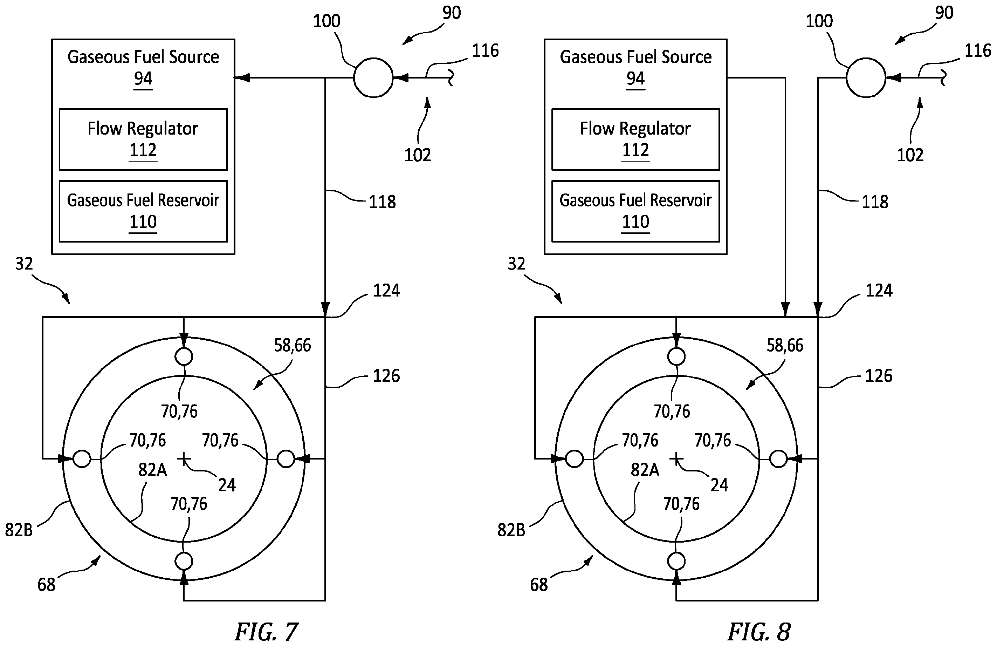

In some embodiments, referring to FIG. 7, the fuel delivery circuit 102 may also be configured to recharge the gaseous fuel source 94 and its gaseous fuel reservoir 110. It is contemplated this recharge capability may be paired with any one of the fuel system arrangements of FIGS. 3, 5 and 6.

In some embodiments, referring to FIGS. 3, 5 and 6, the gaseous fuel source 94 may be coupled to the fuel injectors 76 through the fuel delivery circuit 102 and its circuit downstream section 118. In other embodiments, referring to FIG. 8, the gaseous fuel source 94 may be coupled to the fuel injectors 76 independent of the fuel delivery circuit 102. It is contemplated this independent coupling may otherwise be paired with any one of the fuel system arrangements of FIGS. 3, 5 and 6.

In some embodiments, referring to FIGS. 3, 5 and 6, the control system 130 may also (or alternatively) include an upstream fuel phase sensor 154 arranged with, for example, the primary fuel heater 96. The operability of the upstream fuel phase sensor 154 may be the same as (or similar to) the downstream fuel phase sensor 132. The monitored phase parameter associated with the upstream fuel phase sensor 154 may be used to supplement (or replace) the monitored phase parameter associated with the downstream fuel phase sensor 132.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An operating method for an aircraft powerplant (20), comprising:
directing fuel in a first fuel circuit (102) from a fuel source (92) towards a fuel injector (76) in a combustion section (32) of the aircraft powerplant (20), wherein a fuel system (90) for the aircraft powerplant (20) includes the fuel source (92), the first fuel circuit (102) and the fuel injector (76), and the fuel system (90) is configured to fluidly couple the fuel source (92) to the fuel injector (76) through the first fuel circuit (102);
monitoring a phase parameter of the fuel within the first fuel circuit (102) at a monitoring location (136) between the fuel source (92) and the fuel injector (76); and
operating the fuel system (90) based on the phase parameter, the fuel system (90) operated in a first mode where the phase parameter is indicative of the fuel at the monitoring location (136) being in a gaseous phase, and the fuel system (90) operated in a second mode where the phase parameter is indicative of the fuel at the monitoring location (136) being in a liquid phase or a mixed phase with a first portion of the fuel at the monitoring location (136) in the liquid phase and a second portion of the fuel at the monitoring location (136) in the gaseous phase.

2. The operating method of claim 1, wherein
the fuel system (90) further includes a first fuel heater (98);
during the first mode, the fuel system (90) directs the fuel from the first fuel circuit (102) to the fuel injector (76); and
during the second mode, the fuel system (90) heats the fuel using the first fuel heater (98) prior to directing the fuel from the first fuel circuit (102) to the fuel injector (76).

3. The operating method of claim 2, wherein one or more of:
the first fuel heater (98) is non-operational during the first mode;
the fuel bypasses the first fuel heater (98) as the fuel system (90) directs the fuel through the first fuel circuit (102) from the fuel source (92) to the fuel injector (76) during the first mode; and/or
the first fuel heater (98) does not heat the fuel directed from the fuel source (92) to the fuel injector (76) during the first mode.

4. The operating method of claim 2 or 3, further comprising heating the fuel with a second fuel heater (96) during the first mode and the second mode, wherein the second fuel heater (96) is disposed between the monitoring location (136) and the fuel source (92) along the first fuel circuit (102), optionally wherein the second fuel heater (96) comprises a heat exchanger (114) which transfers heat energy from combustion products to be exhausted from the aircraft powerplant (20) into the fuel.

5. The operating method of claim 4, wherein the first fuel heater (98) is arranged between the monitoring location (136) and the second fuel heater (96) along the first fuel circuit (102).

6. The operating method of claim 4, wherein
the fuel system (90) further includes a second fuel circuit (142);
the first fuel heater (98) is arranged along the second fuel circuit (142); and
during the second mode, the second fuel circuit (142) receives the fuel from the first fuel circuit (102) at a first location (144) downstream of the monitoring location (136) and then directs the fuel back into the first fuel circuit (102) at:
a second location (148) upstream of the monitoring location (136) and downstream of the second fuel heater (96); or
a second location (148) upstream of the second fuel heater (96).

7. The operating method of any of claims 2 to 4, wherein
the fuel system (90) further includes a second fuel circuit (142);
the first fuel heater (98) is arranged along the second fuel circuit (142); and
during the second mode, the second fuel circuit (142) receives the fuel from the first fuel circuit (102) at a first location (144) downstream of the monitoring location (136) and then directs the fuel back into the first fuel circuit (102) at a second location (148) upstream of the monitoring location (136).

8. The operating method of any preceding claim, further comprising:
continued monitoring of the phase parameter during the operating of the fuel system (90) in the second mode; and
switching from the second mode to the first mode once the phase parameter is indicative of the fuel at the monitoring location (136) being in the gaseous phase.

9. The operating method of any preceding claim, wherein
the fuel system (90) further includes a gaseous fuel source (94);
the fuel system (90) fluidly decouples the gaseous fuel source (94) from the fuel injector (76) during the first mode; and
the fuel system (90) fluidly couples the gaseous fuel source (94) to the fuel injector (76) during the first mode, optionally further comprising directing a portion of the fuel in the gaseous phase from the first fuel circuit (102) into the gaseous fuel source (94).

10. The operating method of any preceding claim, wherein the aircraft powerplant (20) comprises a turbine engine (22).

11. The operating method of any preceding claim, wherein the fuel comprises hydrogen fuel.

12. An operating method for an aircraft powerplant (20), comprising:
directing fuel in a liquid phase from a fuel source (92) into a fuel delivery circuit (102), wherein a fuel system (90) for the aircraft powerplant (20) includes the fuel source (92), the fuel delivery circuit (102), a primary fuel heater (96), a secondary fuel heater (98) and a fuel injector (76), and wherein the fuel injector (76) is disposed in a combustion section (32) of the aircraft powerplant (20);
heating the fuel in the fuel delivery circuit (102) using the primary fuel heater (96) to change the fuel into a gaseous phase or into a mixed phase with a first portion of the fuel in the liquid phase and a second portion of the fuel in the gaseous phase;
determining a phase parameter of the fuel within the fuel delivery circuit (102) at a monitoring location (136) downstream of the primary fuel heater (96); and
operating the fuel system (90) based on the phase parameter, the fuel system (90) delivering the fuel to the fuel injector (76) when the phase parameter is indicative that the fuel at the monitoring location (136) is in the gaseous phase, and the fuel system (90) further heating the fuel with the secondary fuel heater (98) when the phase parameter is indicative that the fuel at the monitoring location (136) is in the mixed phase such that the fuel in the mixed phase changes into the gaseous phase for subsequent delivery to the fuel injector (76).

13. The operating method of claim 12, further comprising delivering gaseous fuel to the fuel injector (76) from a gaseous fuel source (94) at least while the secondary fuel heater (98) is heating the fuel to change from the mixed phase to the gaseous phase.

14. An aircraft powerplant (20), comprising:
a turbine engine (22) assembly including a flowpath (58), a compressor section (31), a combustion section (32) and a turbine section (33), the flowpath (58) extending through the compressor section (31), the combustion section (32) and the turbine section (33) from an inlet (62) into the flowpath (58) to an exhaust (64) from the flowpath (58);
a fuel system (90) including a fuel injector (76), a fuel reservoir (104), a fuel delivery circuit (102) and a primary fuel heater (96), the fuel injector (76) arranged in the combustion section (32), the fuel reservoir (104) configured to contain fuel in a liquid phase, the fuel delivery circuit (102) configured to deliver the fuel from the fuel reservoir (104) to the fuel injector (76), and the primary fuel heater (96) configured to heat the fuel which is directed in the fuel delivery circuit (102) to a monitoring location (136) between the fuel reservoir (104) and the fuel injector (76); and
a sensor system (132) configured to monitor a phase parameter of the fuel within the fuel delivery circuit (102) at the monitoring location (136);
wherein the fuel system (90) is configured to operate in a first mode where the phase parameter indicates the fuel at the monitoring location (136) is in a gaseous phase; and
wherein the fuel system (90) is configured to operate in a second mode where the phase parameter indicates the fuel at the monitoring location (136) is in the liquid phase or a mixed phase with a first portion of the fuel at the monitoring location (136) in the liquid phase and a second portion of the fuel at the monitoring location (136) in the gaseous phase.

15. The aircraft powerplant (20) of claim 14, wherein
the fuel system (90) is configured to direct the fuel through the fuel delivery circuit (102) from the fuel reservoir (104) to the fuel injector (76) during the first mode; and
the fuel system (90) further includes a secondary fuel heater (98) downstream of the monitoring location (136), and the fuel system (90) is configured to further heat the fuel using the secondary fuel heater (98) prior to delivering the fuel to the fuel injector (76).
